Europäisches Patentamt

European Patent Office

Office européen des brevets

(19)

(11) Veröffentlichungsnummer: **0 056 841**

**A1**

(12) ## EUROPÄISCHE PATENTANMELDUNG

(21) Anmeldenummer: **81108255.1**

(22) Anmeldetag: **13.10.81**

(51) Int. Cl.³: **F 02 P 5/04**
**G 01 L 23/22**

(30) Priorität: **24.01.81 DE 3102299**

(43) Veröffentlichungstag der Anmeldung:
**04.08.82 Patentblatt 82/31**

(84) Benannte Vertragsstaaten:
**AT DE FR GB IT SE**

(71) Anmelder: **Atlas Aluminium-Fahrzeugtechnik GmbH**
**Eggenpfad 26**
**D-5980 Werdohl(DE)**

(72) Erfinder: **Brandner, Burkhard**
**Bornstrasse 2**
**D-5980 Werdohl(DE)**

(72) Erfinder: **Knüfelmann, Manfred**
**Hörder Strasse 69**
**D-4000 Düsseldorf 30(DE)**

(72) Erfinder: **Blauhut, Reinhold**
**Eggenpfad 24**
**D-5980 Werdohl(DE)**

(74) Vertreter: **Hassler, Werner, Dr.**
**Postfach 17 04 Asenberg 62**
**D-5880 Lüdenscheid(DE)**

(54) **Zündvorrichtung mit Klopfmessvorrichtung.**

(57) Eine elektronische Zündvorrichtung mit Klopfmeßvorrichtung und Regelung, die ein Steuergerät (5) zur Zündwinkelverstellung und einen nachgeschalteten Zündtransformator (8) umfaßt. Es wird das Problem der elektronischen Messung des Klopfens gelöst. An den Zündtransformator (8) ist eine Meßleitung (12) zur Erfassung von Zündspannung und/oder Zündstrom angeschlossen. Zur Auswertung der Signale der Meßleitung (12) ist ein Zeitdiskriminator (15) vorgesehen, der durch den jeweiligen Zündimpuls ausgelöst wird und ein Meßfenster (17) entsprechend dem gleichmäßigen Verlauf des Zündfunkens aus dem Meßsignal ausblendet. Dem Zeitdiskriminator (15) ist ein Meßdiskriminator (19, 21, 24, 27) zur Auswertung des in dem Meßfenster (17) ausgeblendeten Signals nachgeschaltet. Ein Verstellimpulsgeber (30) gibt aufgrund eines Diskriminatorausgangssignals einen Verstellimpuls für den Zündwinkel an das Steuergerät (5) ab.

EP 0 056 841 A1

**0056841**

Lüdenscheid, den 6. Oktober 1980

A 81 128

Dr. Werner
PATENTA...
Asenberg ...
5880 LÜDENSCHEID

Anmelderin: Firma Atlas Aluminium-Fahrzeugtechnik Gmb

Eggenpfad 25

5980 Werdohl

## Zündvorrichtung mit Klopfmeßvorrichtung

### Beschreibung

Die Erfindung betrifft eine elektronische Zündvorrichtung mit Klopfmeßvorrichtung und Regelung, die ein Steuergerät zur Zündwinkelverstellung und einen nachgeschalteten Zündtransformator umfaßt.

Zum Zwecke der Kraftstoffeinsparung und insbesondere zum Zwecke der Herabsetzung schädlicher Abgasbestandteile muß man einen Verbrennungsmotor möglichst nahe an der Klopfgrenze fahren. Damit bei dieser Betriebsweise ein Klopfen mit Sicherheit vermieden ist, muß jeweils das unerwünschte Auftreten von Klopfen erfaßt werden, um die Verstelllinie der Zündvorrichtung entsprechend zu korrigieren. Zur Erfassung des Klopfens sind Körperschallmesser bekannt. Diese sprechen allerdings nicht auf alle Zylinder eines Verbrennungsmotors gleichmäßig an. Außerdem ist es schwierig, eine Erregung dieser Körperschallmesser durch andere Frequenzen auszuschließen.

Genaue Untersuchungen des Zündfunkenverlaufs haben ergeben, daß sich das Auftreten von Klopfen durch charakteristische Veränderungen des Zündfunkenverlaufs bemerkbar macht. Im einzelnen treten in der Entladungskennlinie des Zündfunkens hochfrequente Spannungsanteile, ungewöhnliche Spannungsanstiege, ein Zusammenbrechen des Zündfunkens und dergleichen auf.

Aufgabe der Erfindung ist es, das Klopfen durch Auswertung der Zündfunkenkennlinie zu erfassen.

Diese Aufgabe wird nach der Erfindung durch folgende Merkmale gelöst:

a) an den Zündtransformator ist eine Meßleitung zur Erfassung von Zündspannung und/oder Zündstrom angeschlossen;

b) zur Auswertung der Signale der Meßleitung ist ein Zeitdiskriminator vorgesehen, der durch den jeweiligen Zündimpuls ausgelöst wird
und ein Meßfenster entsprechend dem gleichmäßigen Verlauf des
Zündfunkens aus dem Meßsignal ausblendet;

c) dem Zeitdiskriminator ist ein Meßdiskriminator zur Auswertung des
in dem Meßfenster ausgeblendeten Signals nachgeschalter;

d) ein Verstellimpulsgeber gibt aufgrund eines Diskriminatorausgangssignals einen Verstellimpuls für den Zündwinkel an das Steuergerät
ab.

Die Erfindung erlaubt somit die gleichmäßige Erfassung des Klopfens aller Zylinder eines Verbrennungsmotors. Die Klopfmeßvorrichtung
ist jeweils an den Zündtransformator angeschlossen, so daß beim Vorhandensein mehrerer Zündtransformatoren auch mehrere Klopfmeßvorrichtungen vorzusehen sind. Die Erfindung erlaubt eine sichere Ausschaltung von Klopfen, auch wenn der Verbrennungsmotor unmittelbar an der
Klopfgrenze gefahren wird. Wenn ein Klopfen erfaßt wird, so gibt der
Verstellimpulsgeber an das Steuergerät einen Verstellimpuls ab, damit
der Zündwinkel um eine Einheit nachgestellt wird. Diese Korrektur
wird so lange wiederholt, bis der Verbrennungsmotor in einen klopffreien Betriebszustand kommt.

Eine Ausführungsform der Erfindung wird im folgenden unter Bezugnahme auf die anliegende Zeichnung erläutert, die in schematischer
Blockdarstellung eine Zündvorrichtung zeigt.

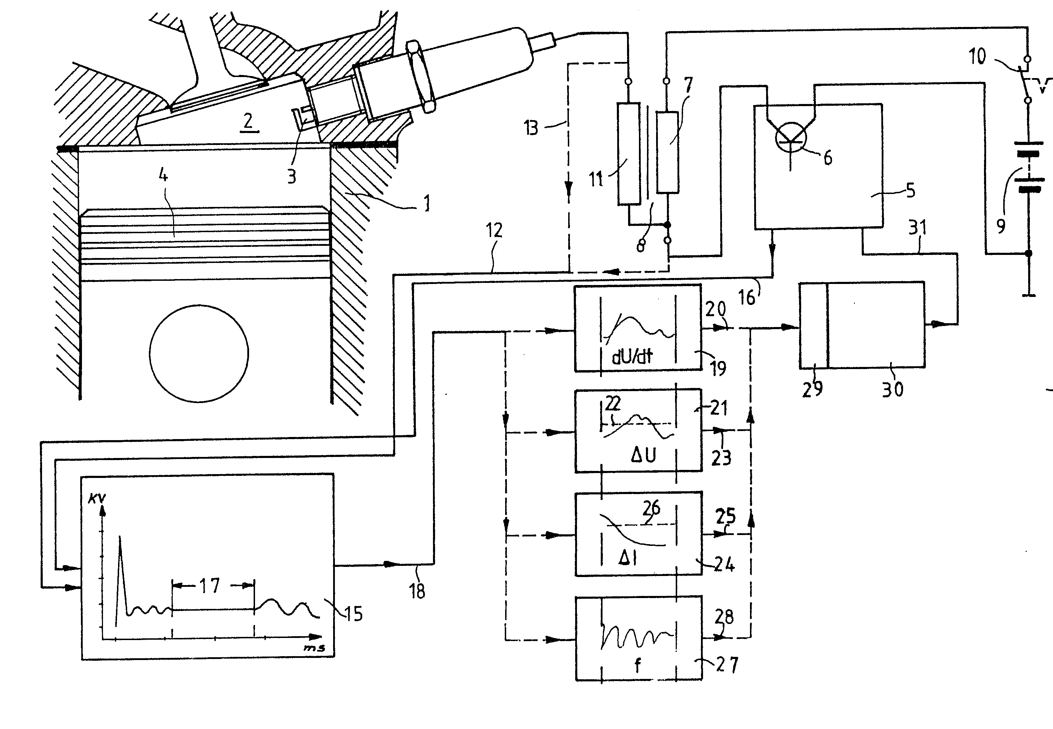

Die Zeichnung zeigt das Oberteil eines Zylinders 1 mit dem Verbrennungsraum 2 und der Zündkerze 3. Der Kolben 4 befindet sich kurz
vor Erreichen des oberen Totpunktes. Für die Zündung ist ein elektronisches Steuergerät vorgesehen, das eine vorgegebene Verstellinie aufgrund der Betriebsdaten des Verbrennungsmotors fährt. Einzelheiten
dieses Steuergerätes sind nicht erläutert. Das Steuergerät schaltet
über einen elektronischen Schalter 6 den Strom durch die Primärspule
7 des Zündtransformators 8. Dieser Primärstrom fließt aus der Kraftfahrzeugbatterie 9 über den Zünd-Anlaß-Schalter 10. An die Sekundärspule 11 des Zündtransformators ist die Zündkerze 3 angeschlossen.
Ein etwa vorhandener Kondensator und zusätzliche Schaltglieder sind
der Einfachheit halber nicht dargestellt. Dem Zündtransformator 8 ist
normalerweise ein Zündverteiler nachgeschaltet, der ebenfalls nicht
dargestellt ist. Je nach Bauweise des Verbrennungsmotors können auch
mehrere Zündtransformatoren für einzelne Gruppen von Zylindern vorhanden sein.

Die Erfindung sieht eine Meßleitung 12 vor, die mit jedem Zündtransformator 8 gekoppelt ist. Im einzelnen ist die Meßleitung 12 über eine Leitung 13 an die Sekundärspule 11 oder über eine Leitung 14 an die Primärspule 7 angeschlossen. Die Meßleitung 12 ist zu einem Zeitdiskriminator 15 geführt. Der Zeitdiskriminator 15 ist außerdem über eine Leitung 16 mit dem Steuergerät 5 verbunden. Die Signalleitung gibt jeweils den Zündauslöseimpuls des Steuergerätes 5 an den Zeitdiskriminator 15 weiter. In der Zeichnung ist der Spannungsverlaufs eines normalen Zündfunkens dargestellt. Die Spannung steigt zunächst steil an und fällt nach Durchschlag des Zündfunkens ab. Es schließt sich ein Abschnitt von gedämpften Schwingungen an. Dieser Abschnitt hat einen nahezu gleichmäßigen Spannungsverlauf. Schließlich bricht der Zündfunken zusammen. Die Erfindung erfaßt den gleich-mäßen Abschnitt des Spannungsverlaufs durch ein Meßfenster 17.

Wenn im Betrieb des Verbrennungsmotors ein Klopfen auftritt, so treten innerhalb dieses Meßfensters 17 charakteristische Veränderungen des Spannungsverlaufs auf. Diese können nach der Erfindung in unterschiedlicher Weise ausgewertet werden. Die innerhalb des Meßfensters 17 ausgeblendete Zündspannung wird über die Leitung 18 zu einem oder mehrere Diskriminatoren weitergegeben.

Die Erfindung sieht im einzelnen einen Steilheitsdiskriminator 19 vor, der die zeitliche Änderung der Zündspannungskennlinie auswertet. Sobald eine Schwelle der Steilheit überschritten wird, gibt der Steilheitsdiskriminator 19 auf der Ausgangsleitung 20 einen Signalwert ab. In anderer Weise kann man einen Spannungsdiskriminator 21 vorsehen, der auf einen Spannungspegel 22 eingestellt ist. Sobald in der Zündspannungskennlinie der Wert des Spannungspegels 22 überschritten wird, erscheint auf der Ausgangsleitung 23 ein Signalwert. In anderer Weise schlägt die Erfindung einen Stromdiskriminator 24 vor, der auf der Ausgangsleitung 25 einen Signalwert abgibt, sobald innerhalb der Zündkennlinie der Strom einen Strompegel 26 unterschreitet. Dieses bedeutet, daß der Zündfunke zusammenbricht. Schließlich schlägt die Erfindung einen Frequenzdiskriminator 27 vor, der als Hochpaßfilter ausgelegt ist und hochfrequente Änderungen im Zündspannungsverlauf erfaßt. Sobald solche hochfrequenten Änderungen auftreten, erscheint auf der Ausgangsleitung 28 ein Signalwert. Nach der Erfindung kann man einen oder mehrere dieser Diskriminatoren 19, 21, 24, 27 vorsehen. Normalerweise wird man die Steilheit der Zündspan-

0056841

nung und die Frequenz bevorzugt erfassen. Die Ausgangsleitungen 20, 23, 25, 27 sind in einer Oderschaltung 29 eines Verstellimpulsgebers 30 zusammengeführt. Sobald mindestens eine Ausgangsleitung 20, 23, 25, 27 einen Signalwert führt, gibt die Oderschaltung 29 ein Auslösesignal an den Verstellimpulsgeber 30 weiter, so daß derselbe über die Leitung 31 ein Stellsignal an das Steuergerät 5 abgibt. Dieses Stellsignal bewirkt eine Zurücknahme der Vorzündung um eine Einheit. Nach Abgabe eines Verstellimpulses auf der Leitung 31 ist der Verstellimpulsgeber für die Dauer einiger Zündimpulse unwirksam, damit keine Regelschwingungen der Anordnung auftreten. Wenn jedoch durch die erfolgte Zurücknahme der Vorzündung die Kopfgrenze nicht unterschritten wird, werden weitere Meßsignale den Verstellimpulsgeber 30 erreichen, so daß dann zusätzliche Verstellimpulse auf der Leitung 31 erscheinen. Dadurch wird die Verstelllinie der Zündvorrichtung immer unterhalb der Klopfgrenze gehalten.

Dr. Werner ...
PATENTANWALT
Asenberg 62, Postfach 1704
5880 LÜDENSCHEID

Lüdenscheid, den 6. Oktober 1981

A 81 128

Anmelderin: Firma Atlas Aluminium-Fahrzeugtechnik GmbH

Eggenpfad 26

5980 Werdohl

## Zündvorrichtung mit Klopfmeßvorrichtung

### Patentansprüche

1. Elektronische Zündvorrichtung mit Klopfmeßvorrichtung und Regelung, die ein Steuergerät zur Zündwinkelverstellung und einen nachgeschalteten Zündtransformator umfaßt, gekennzeichnet durch folgende Merkmale:

a) an den Zündtransformator (8) ist eine Meßleitung (12) zur Erfassung von Zündspannung und/oder Zündstrom angeschlossen;

b) zur Auswertung der Signale der Meßleitung (12) ist ein Zeitdiskriminator (15) vorgesehen, der durch den jeweiligen Zündimpuls ausgelöst wird und ein Meßfenster (17) entsprechend dem gleichmäßigen Verlauf des Zündfunkens aus dem Meßsignal ausblendet;

c) dem Zeitdiskriminator (15) ist ein Meßdiskriminator (19, 21, 24, 27) zur Auswertung des in dem Meßfenster (17) ausgeblendeten Signals nachgeschaltet;

d) ein Verstellimpulsgeber (30) gibt aufgrund eines Diskriminatorausgangssignals einen Verstellimpuls für den Zündwinkel an das Steuergerät (5) ab.

2. Zündvorrichtung nach Anspruch 1, dadurch gekennzeichnet, daß der Meßdiskriminator ein Steilheitsdiskriminator (19) ist, der eine Schwelle der Steilheit des Spannungsanstiegs (dU/dt) erfaßt.

3. Zündvorrichtung nach Anspruch 1, dadurch gekennzeichnet, daß der Meßdiskriminator ein Spannungsdiskriminator (21) mit einer Spannungsschwelle ist.

4. Zündvorrichtung nach Anspruch 1, dadurch gekennzeichnet, daß der Meßdiskriminator ein Stromdiskriminator (24) ist, der beim Unterschreiten einer Stromschwelle anspricht.

5. Zündvorrichtung nach Anspruch 1, dadurch gekennzeichnet, daß der Meßdiskriminator ein Frequenzdiskriminator (27) inform eines Hochpasses ist, der auf hochfrequente Zündspannungsimpulse anspricht.

6. Zündvorrichtung nach einem der Ansprüche 1 bis 5, dadurch gekennzeichnet, daß im Eingangsteil des Verstellimpulsgebers (30) eine Oderschaltung (29) vorgesehen ist, in der mehrere Meßdiskriminatorstufen zusammengeführt sind.

7. Zündvorrichtung nach einem der Ansprüche 1 bis 6, dadurch gekennzeichnet, daß der Verstellimpulsgeber (30) nach Abgabe eines Verstellimpulses für einige Zündperioden unwirksam ist.

0056841

A 81003

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 3 018 555 (MITSUBISHI)<br>* Seiten 5 bis 12; Fig. 1 *<br>-- | 1 |
| | US - A - 2 517 976 (H.A. CLARKE)<br>* Spalte 1, Zeilen 51 bis 54;<br>Spalte 3, Zeilen 60 bis 75 *<br>-- | 1 |
| | US - A - 3 286 164 (C.B. DE HUFF)<br>* Anspruch 1; Spalte 1, Zeilen 16<br>bis 32; Fig. 1 *<br>-- | 1 |
| | DE - A1 - 2 731 841 (DAIMLER-BENZ AG)<br>* Anspruch 1, Seite 1;<br>Ansprüche 3 bis 5, 8, Seite 2 *<br>-- | 1,2,5 |
| A | DE - A1 - 2 918 420 (R. BOSCH GMBH)<br>* Ansprüche 1, 2; Seiten 8, 10 *<br>---- | 1,5 |

**KLASSIFIKATION DER ANMELDUNG (Int. Cl.³)**

F 02 P    5/04
G 01 L   23/22

**RECHERCHIERTE SACHGEBIETE (Int. Cl.³)**

F 02 P    5/00
G 01 L   23/22

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 14-12-1981 | ROUSSEL |

EPA form 1503.1  06.78